(19) **Europäisches Patentamt / European Patent Office / Office européen des brevets**

(11) **EP 4 785 777 A1**

(12) **EUROPEAN PATENT APPLICATION**
published in accordance with Art. 153(4) EPC

(43) Date of publication:
**05.08.2026 Bulletin 2026/32**

(21) Application number: **24871768.8**

(22) Date of filing: **04.09.2024**

(51) International Patent Classification (IPC):
**A01G 7/00** *(2006.01)* **A01M 21/04** *(2006.01)*

(52) Cooperative Patent Classification (CPC):
**A01G 7/00; A01G 22/22; A01M 21/04**

(86) International application number:
**PCT/JP2024/031731**

(87) International publication number:
**WO 2025/069969 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 JP 2023164651**

(71) Applicant: **Kubota Corporation**
**Osaka-shi, Osaka 530-0011 (JP)**

(72) Inventor: **TAKEUCHI, Yu**
**Sakai-shi, Osaka 590-0908 (JP)**

(74) Representative: **Müller-Boré & Partner**
**Patentanwälte PartG mbB**
**Friedenheimer Brücke 21**
**80639 München (DE)**

(54) **AGRICULTURAL ASSISTANCE SYSTEM AND METHOD FOR DETECTING CROP ROWS**

(57) An agricultural assistance system includes a processing unit to process an image of a field including a plurality of crop rows as viewed from above to detect the plurality of crop rows. The processing unit is configured to: from the image, generate a vegetated area image into which a vegetated area including the plurality of crop rows is extracted; along N summation lines, where N is an integer of 2 or greater, in the vegetated area image, take a sum of pixel values of pixels of the vegetated area image to derive N summation values associated with the N summation lines; apply a filter to a linear array storing the N summation values and perform a convolution operation to derive N weighted summation values; and detect the plurality of crop rows based on the N weighted summation values.

*FIG.3*

## Description

## TECHNICAL FIELD

The present disclosure relates to agricultural assistance systems and methods of crop row detection.

## BACKGROUND ART

Research and development of smart agriculture that employs ICT (Information and Communication Technology) and IoT (the Internet of Things), as the next-generation agriculture, are under way. Agricultural assistance systems that manage information about fields in a centralized manner on a cloud and provide assistance in agriculture using data on the cloud are under research and development. Agricultural assistance systems enable efficient performance of general tasks required for agricultural operations, such as pest control, tilling, seeding, manure spreading, planting of crops, or harvesting.

Moreover, various techniques have been proposed for detecting crop rows by processing images that contain crop rows in a field. Patent Document 1 discloses a control method such that, within a field having rows of ridges with crops being planted, an implement is caused to travel along the ridges. By processing an image that includes the field, an angle between the direction in which a ridge extends and a traveling direction of the implement, or an amount of misalignment of the implement from the center position of the ridge, is calculated.

## CITATION LIST

## PATENT LITERATURE

[Patent Document 1] Japanese Patent No. 6418604

## SUMMARY OF INVENTION

## TECHNICAL PROBLEM

There may be cases where changes in the environment such as the kind of crop or the growth stage of the crop prevent crop rows from being properly detected. Therefore, improvements in accuracy and robustness of crop row detection are desired.

## SOLUTION TO PROBLEM

An agricultural assistance system according to one aspect of the present disclosure includes a processing unit to process an image of a field including a plurality of crop rows as viewed from above, and to detect the plurality of crop rows, wherein the processing unit is configured to: from the image, generate a vegetated area image into which a vegetated area including the plurality of crop rows is extracted; along N summation lines, where N is an integer of 2 or greater, in the vegetated area image, take a sum of pixel values of pixels of the vegetated area image to derive N summation values associated with the N summation lines; apply a filter to a linear array storing the N summation values and perform a convolution operation to derive N weighted summation values; and detect the plurality of crop rows based on the N weighted summation values.

A method according to one aspect of the present disclosure is a computer-implemented method of detecting a plurality of crop rows in a field, wherein the method causes a computer to execute: acquiring an image of the field as viewed from above; from the image, generating a vegetated area image into which a vegetated area including the plurality of crop rows is extracted; along N summation lines, where N is an integer of 2 or greater, in the vegetated area image, taking a sum of pixel values of pixels of the vegetated area image to derive N summation values associated with the N summation lines; applying a filter to a linear array storing the N summation values and performing a convolution operation to derive N weighted summation values; and detecting the plurality of crop rows based on the N weighted summation values.

Example embodiments of the present disclosure may be implemented using devices, systems, methods, integrated circuits, computer programs, non-transitory computer-readable storage media, or any combination thereof. The computer-readable storage media may be inclusive of a volatile storage medium, or a nonvolatile storage medium. Each of the devices may include a plurality of devices. In the case where one of the devices includes two or more devices, the two or more devices may be disposed within a single apparatus, or divided over two or more separate apparatuses.

## ADVANTAGEOUS EFFECTS OF INVENTION

According to embodiments of the present disclosure, it becomes possible to improve accuracy and robustness of crop row detection.

## BRIEF DESCRIPTION OF DRAWINGS

[FIG. **1**] A schematic diagram showing an example configuration for an agricultural assistance system according to an embodiment of the present disclosure.

[FIG. **2**] A block diagram showing an example hardware configuration for an agricultural assistance system according to an embodiment of the present disclosure

[FIG. **3**] A flowchart showing a processing procedure by an algorithm for crop row detection according to an example implementation.

[FIG. **4A**] A diagram showing an example of an input image including rows of lowland rice.

[FIG. 4B] A diagram showing an example of a vegetated area image including a vegetated area which is rows of lowland rice.

[FIG. 5A] A diagram showing an example of an input image before preprocessing.

[FIG. 5B] A diagram showing an example of a binary image after preprocessing.

[FIG. 6A] A diagram showing another example of an input image before preprocessing.

[FIG. 6B] A diagram showing another example of a binary image after preprocessing.

[FIG. 7] A flowchart showing a specific example of a processing procedure included in step S30.

[FIG. 8A] A diagram showing an example of a rotational vegetated area image that is obtained by rotating a vegetated area image by a first rotation angle around the origin of a two-dimensional coordinate system.

[FIG. 8B] A diagram showing an example of a rotational vegetated area image that is obtained by rotating a vegetated area image by a second rotation angle around the origin of a two-dimensional coordinate system.

[FIG. 8C] A diagram showing an example of a rotational vegetated area image that is obtained by rotating a vegetated area image by a third rotation angle around the origin of a two-dimensional coordinate system

[FIG. 8D] A diagram showing an example of a rotational vegetated area image that is obtained by rotating a vegetated area image by a fourth rotation angle around the origin of a two-dimensional coordinate system

[FIG. 9] A schematic diagram showing an example of a frequency spectral image that is generated by applying a DFT to a vegetated area image.

[FIG. 10A] A schematic diagram illustrating a plurality of summation lines in a vegetated area image or rotational vegetated area image shown in FIG. 8A.

[FIG. 10B] A schematic diagram illustrating a plurality of summation lines in a rotational vegetated area image shown in FIG. 8B.

[FIG. 11] A flowchart showing a specific example of a processing procedure included in step S40.

[FIG. 12] A schematic diagram for describing a convolution operation.

[FIG. 13] A schematic diagram showing schematically a list which is obtained by sorting in descending order N weighted summation values for each rotational vegetated area image that are included in sets of weighted summation values.

[FIG. 14] A flowchart showing a specific example of a processing procedure included in step S30 according to another example implementation.

[FIG. 15] A flowchart showing a specific example of a processing procedure included in step S40 according to another example implementation.

[FIG. 16] A flowchart showing a processing procedure of an algorithm of transmitting an instruction for pest control to an agricultural machine upon detection of weeds, according to an example implementation.

[FIG. 17] A partial enlarged view of a vegetated area image.

[FIG. 18] A diagram illustrating a detection result image which indicates a result of detecting crop rows and weeds.

## DESCRIPTION OF EMBODIMENTS

Hereinafter, example embodiments of the present disclosure will be described. Note, however, that unnecessarily detailed descriptions may be omitted. For example, detailed descriptions on what is well known in the art or redundant descriptions on what is substantially the same configuration may be omitted. This is to avoid lengthy description and to facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following example embodiments are only exemplary, and the techniques and example embodiments according to an example embodiment of the present disclosure are not limited to the following example embodiments. For example, numerical values, shapes, materials, steps, orders of steps, layout in a display screen, etc., that are indicated in the following example embodiments are only exemplary, and admit of various modifications so long as it makes technological sense. Any one implementation may be combined with another so long as it makes technological sense to do so.

[1. system configuration]

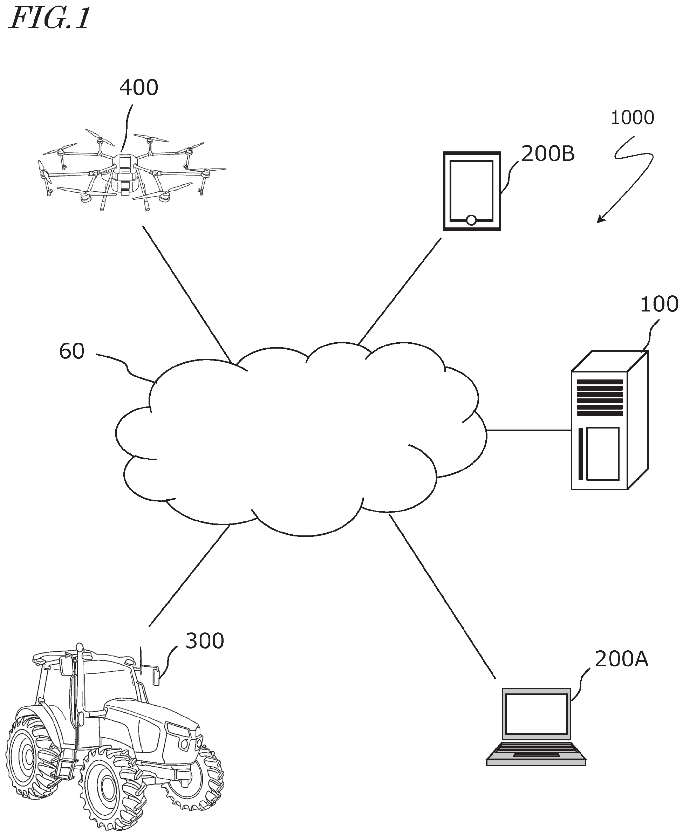

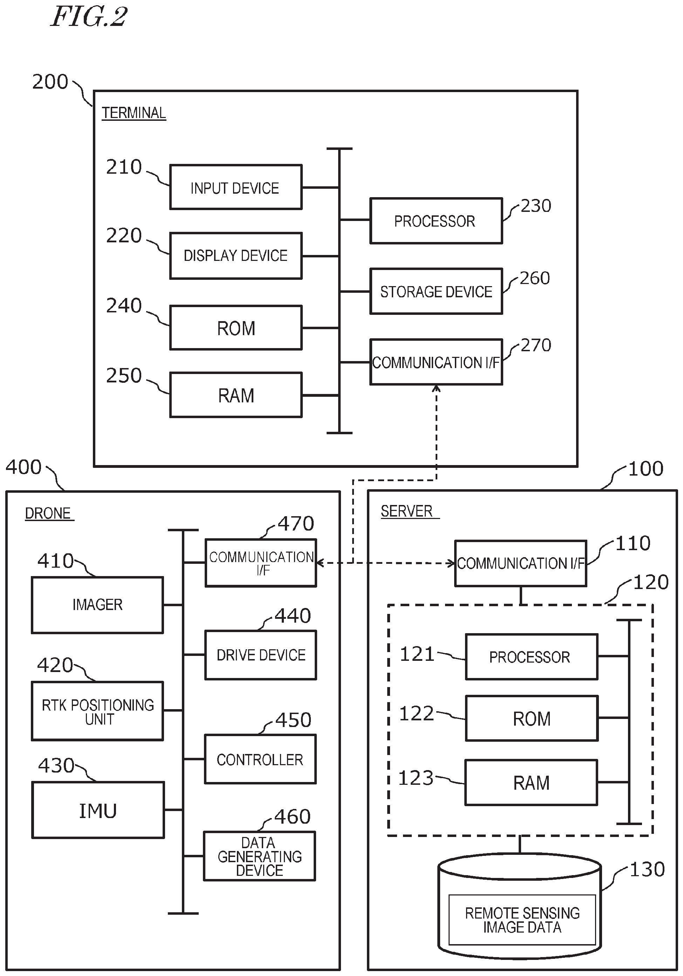

With reference to FIG. 1 and FIG. 2, an example hardware configuration for an agricultural assistance system 1000 according to the present embodiment and various devices to be connected to the agricultural assistance system 1000 will be described. Her, the agricultural assistance system 1000 will simply be referred to as the "system 1000".

FIG. 1 is a schematic diagram showing an example configuration for the system 1000 according to an embodiment of the present disclosure. FIG. 2 is a block diagram showing an example hardware configuration for the system 1000 according to an embodiment of the present disclosure. FIG. 2 also shows the hardware configuration of an unmanned aerial vehicle (UAV) 400 that is connected to the system 1000 via a network 60 so as to be capable of communication therewith.

Structurally, an unmanned aerial vehicle is an aircraft in which no person can ride, such that the aircraft is capable of flying via remote manipulation or automatic control. A rotor-type unmanned aerial vehicle is an unmanned aerial vehicle that provides a lift by using a propeller(s) that rotates around an axis, i.e., a rotor(s). Small-sized unmanned aerial vehicles with a plurality of rotors (Multi-Rotor UAV) are also called "drones", "multirotors", or "multicopters", which are widely used in applications such as aerial photography, surveying, agrochemical spraying, and the like. In the present specification, an unmanned aerial vehicle is referred to as a drone.

The system **1000** has various functions for assisting in agricultural work. For example, the system **1000** may have the function of managing fields, the function of checking the growth status of crops within the field, the function of transmitting instructions for pest control to an agricultural machine according to a result of detecting weeds growing in a field, the function of generating a work log, the function of making an analysis of taste and yield data from field to field to create a manure spreading design, the function of creating a harvest plan, the function of making a material costs simulation from field to field, e.g., agrochemicals and fertilizers, and son. As the agricultural machine **300** such as a tractor cooperates with the system **1000**, the yield and quality of crops can be improved.

The system **1000** is essentially realized as a computer system. The system **1000** according to an embodiment of the present disclosure includes a server computer **100** (hereinafter referred to as the "server **100**") and one or more terminals **200**. For example, one or more agricultural machine **300** and/or one or more drone **400** may be connected to the system **1000** so as to be capable of mutual communication via the wired or wireless network **60**. FIG. **1** shows an example connection where two terminals **200A** and **200B,** one agricultural machine **300,** and one drone **400** are connected with the system **1000** so as to be capable of mutual communication via the network **60**. However, the number of terminals **200**, the number of agricultural machines **300** and the number of drones **400** to be connected to the network **60** may be arbitrary. Hereinafter, the respective illustrate component elements will be described.

(server **100**)

The server **100** may be a computer that is installed in a remote place from the agricultural machine **300** and the drone(s) **400**, e.g., a cloud server or an edge server. The server **100** includes a communication interface (I/F) **110**, a processing unit **120**, and a storage device **130**. In an embodiment of the present disclosure, the server **100** functions as a cloud server that keeps information concerning fields under centralized management and assists in agriculture by utilizing the data it manages.

The communication I/F **110** is an interface to communicate with the terminal(s) **200**, the agricultural machine **300,** and the drone(s) **400** via the network **60**. For example, the communication I/F **110** is able to perform wired communication compliant with various protocols. The communication I/F **110** may perform wireless communication compliant with the Bluetooth (registered trademark) protocols and/or the Wi-Fi (registered trademark) standards. These standards include a wireless communication standard that uses the 2.4 GHz frequency band.

The processing unit **120** includes, for example, a processor **121**, a ROM (Read Only Memory) **122,** a RAM (Random Access Memory) **123,** and the like. Software (or firmware) with which the processor **121** performs at least one process may be implemented in the ROM **122**. Such software may be recorded on a computer-readable storage medium, e.g., an optical disc, and marketed as package software, or provided to the user via the network **60**.

The processor **121** is a semiconductor integrated circuit that includes a central processing unit (CPU). The processor **121** The processor **111** may be implemented by a microprocessor or microcontroller. The processor **111** sequentially executes a computer program stored in the ROM **122**, in which instructions for executing at least one process are written, to carry out the desired processes.

In addition or instead of the processor **121**, the processing unit **120** may include a field programmable gate array (FPGA), graphics processing unit (GPU), application specific integrated circuit (ASIC), or application specific standard product (ASSP) with a CPU mounted thereon, or a combination of two or more selected from these circuits.

The ROM **122** is, for example, a writable memory (e.g., a PROM), a rewritable memory (e.g., a flash memory), or a read-only memory. The ROM **122** stores a program that controls operations of the processor **121**. The ROM **122** may not necessarily be a single storage medium, and may be a set of storage media. A portion of the set may be removable memory.

The RAM **123** provides a work area into which the control program of the ROM **122** will be temporarily loaded during boot-up. The RAM **123** may not necessarily be a single storage medium, and may be a set of storage media.

The storage device **130** mainly functions as a storage for a database. An example of the storage device **130** is a cloud storage. The storage device **130** may be a semiconductor storage device, a magnetic storage device, an optical storage device, or a combination thereof, for example. However, the storage device **130** may be an external storage device that is connected to the server **100** via the network **60**.

The storage device **130** may store field image data. An example of field image data is data of aerial photography images that were captured by a drone, including one or more fields as the subject. Aerial photography images may be remote sensing images such as aerial photographs or satellite images. A remote sensing image may contain geographic information or positional information.

A "remote sensing image" is digital data that is acquired by sensing the ground remotely with a sensor(s) that is mounted on an artificial satellite, a manned aircraft, a drone, or the like. Remote sensing images include RGB images, grayscale images, multispectral images, or vegetation index images, for example. Examples of sensors are RGB image sensors, multispectral sensors, and the like. A multispectral sensor is capable of simultaneously acquiring images of five wavelength bands, for example: red, green, blue, red-edge, and near-infrared. The images of five wavelength bands include RGB images, red-edge images, and near-infrared images. Remote sensing images may be aerial surveying imagery from which to generate a map or a field map.

(terminal **200**)

An example of a terminal **200** is a personal computer (PC), a laptop computer, a tablet computer, a smartphone, or a PDA (Personal digital assistant). In FIG. **1**, a laptop computer **200A** and a tablet computer **200B** are illustrated as example terminals **200**.

A terminal **200** includes an input device **210**, a display device **220**, a processor **230**, a ROM **240**, a RAM **250**, a storage device **260,** and a communication I/F **270**. These component elements are connected to one another via a bus so as to be capable of mutual communication.

The input device **210** is a device for converting a command from a user into data, and inputs it to a computer. Examples of the input device **210** are a keyboard, a mouse, and a touchscreen panel.

Examples of the display device **220** are liquid crystal displays and organic EL displays.

The description of each of the processor **230**, the ROM **240**, the RAM **250**, and the storage device **260** is as has been given in connection with the example hardware configuration for the server **100**, and is omitted here.

The communication I/F **270** is an interface for communicating with the server **100**, the agricultural machine **300,** and the drone(s) **400** via the network **60**. For example, as is the case with the communication I/F **110**, the communication IF **270** is capable of wired communication compliant with the USB, IEEE1394 (registered trademark), Ethernet (registered trademark) standards, or other communication standards. As is the case with the communication IF **110**, the communication I/F **270** is capable of wireless communication compliant with the Bluetooth (registered trademark) protocols and/or the Wi-Fi standards.

(agricultural machine **300**)

As used in the present disclosure, an "agricultural machine" broadly includes any machine that performs basic tasks of agriculture, e.g., "tilling", "planting", and "harvesting", in fields. An agricultural machine is a machine that has a functionality and structure to perform agricultural operations such as tilling, seeding, pest control, manure spreading, planting of crops, or harvesting for the ground surface within a field. Such agricultural work, tasks, or operations may be referred to as "groundwork", or simply as "work", "tasks", or "operations". An agricultural machine does not need to include a traveling device for moving the agricultural machine itself, and may travel by being attached to, or towed by, another vehicle including a traveling device. Not only does a work vehicle, such as a tractor, function as an "agricultural machine" by itself alone, but an implement that is attached to, or towed by, a work vehicle and the work vehicle may, as a whole, function as one "agricultural machine". Examples of agricultural machines include tractors, pest control machines, vehicles for crop management, and field-moving robots. Pest control machines include, for example, speed sprayers, boom sprayers, vehicles for crop management, and drones.

The agricultural machine **300** illustrated in FIG. **1** is a tractor for use in a field. The tractor includes, for example, a vehicle body on which a cabin is provided, wheels (tires), a prime mover (engine), a transmission, a controller including one or more electronic control units (ECU), a GNSS unit, and a communicator. The tractor may further include an edge computer.

The GNSS unit is a GNSS receiver that includes an antenna to receive signals from GNSS satellites and a processing circuit. The GNSS unit receives GNSS signals that are transmitted from GNSS satellites such as GPS (Global Positioning System), GLONASS, Galileo, BeiDou, or QZSS (Quasi-Zenith Satellite System, e.g., MICHIBIKI), and performs positioning based on such signals, for example. The communicator included in the tractor is capable of wired communication via a CAN (Controller Area Network) or the like, or wireless communication compliant with the Bluetooth(registered trademark) protocols and/or the Wi-Fi (registered trademark) standards.

(drone **400**)

A drone **400** includes an imager **410**, an RTK (Real Time Kinematic GPS) positioning unit **420**, an inertial measurement unit (IMU) **430**, a drive device **440**, a controller **450**, a data generating device **460,** and a communication I/F **470**, for example. Flight of the drone **400** can be controlled through the use of the user's terminal(s) **200**, for example.

The imager **410** includes an image sensor(s), e.g., RGB image sensors or a multispectral sensor, lens optics, and a data processing circuit. The image sensor(s) may be a CMOS sensor(s) having pixels on the order of e.g. several Mpx to several ten Mpx. The imager **410** can acquire an RGB image that includes a field region and a multispectral image or a vegetation index image that may include a grayscale image, an RGB image, a red-edge image, and a near-infrared image, for example. The imager **410** can acquire one frame of an image per second, for example.

The RTK positioning unit **420** includes a GNSS receiver, a Wi-Fi communication module, and a microcontroller, for example. The RTK positioning unit outputs a signal indicating the position of the drone **400** in a world coordinate system such as a geographic coordinate system that is fixed to the globe. The RTK positioning unit is capable of positioning with a precision within several cm. Positional information including latitude, longitude, and altitude information is acquired through high-precision positioning.

The IMU **430** includes an acceleration sensor and an angular acceleration sensor, and outputs a signal indicating an amount of move and attitude of the drone **400** (or the imager **410**).

The drive device **440** includes various devices that are needed for flight of the drone **400,** such as an electric motor for driving purposes and multiple rotors, etc.

For example, the controller **450** includes a flight controller such as a controller for flight control and an upper-level computer (companion computer). The controller **450** controls the operation of the drive device 440 based on output signals from the RTK positioning unit **420** and the IMU **430**.

The data generating device **460** generates metadata compliant with the Exif (Exchangeable image file format) standards, including shooting information, for example. For example, the metadata may include information such as shooting date/time, positional information (geotag), attitude information, image resolution, shutter speed, aperture (F value), ISO sensitivity, and the like. By processing data that is output from the imager **410** and adding metadata to the processed data, the data generating device **460** can generate image data in file formats such as RAW, DNG, TIFF, GeoTIFF, and JPEG.

The communication I/F **470** is an interface for performing communication between the drone **400** and an external device. For example, the communication I/F **470** may perform wireless communication compliant with mobile communications and/or Wi-Fi (registered trademark) standards such as LTE (Long Term Evolution)/4G/5G.

In one aspect, the system **1000** according to an embodiment of the present disclosure includes a processing unit to process an image of a field including a plurality of crop rows as viewed from above, and to detect the plurality of crop rows. The processing unit **120** of the server **100,** the edge computer of the agricultural machine **300**, or the processor(s) **230** of the terminal(s) **200**, or at least two of these arithmetic units working in cooperation, may achieve the functions of the processing unit of the system **1000** as described above. In an embodiment of the present disclosure, the processing unit **120** of the server **100** functions as the processing unit of the system **1000**.

The processing unit of the system **1000** is configured to: from an image, generate a vegetated area image into which a vegetated area including the plurality of crop rows is extracted; along N summation lines, where N is an integer of 2 or greater, in the vegetated area image, take a sum of pixel values of pixels of the vegetated area image to derive N summation values associated with the N summation lines; apply a filter to a linear array storing the N summation values and perform a convolution operation to derive N weighted summation values; and detect the plurality of crop rows based on the N weighted summation values. The processing unit may be further configured to identify a region between adjacent crop rows based on a result of detecting the crop rows, and to transmit to an agricultural machine an instruction for pest control when weeds growing in the identified region are detected.

[2. Example implementations of algorithm of crop row detection]

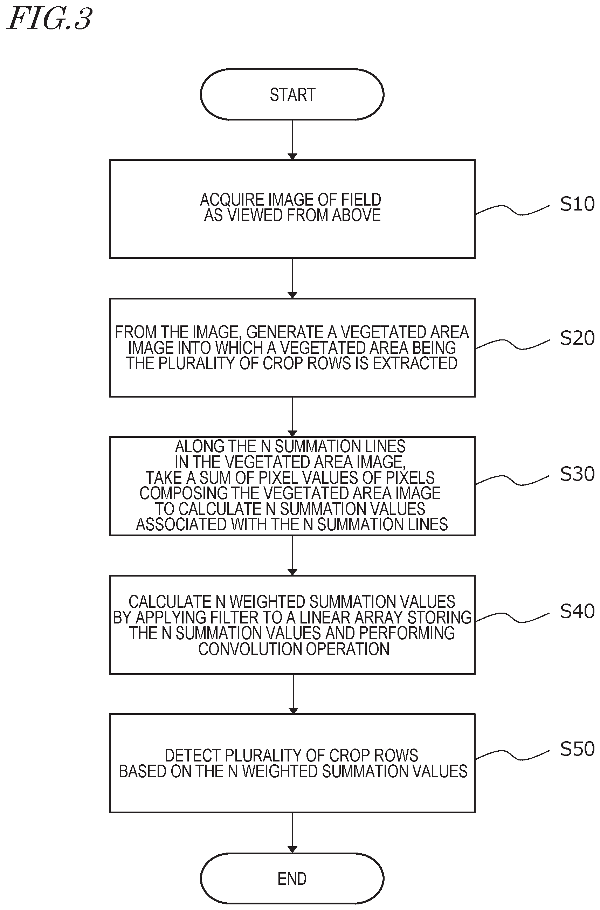

FIG. **3** is a flowchart showing a processing procedure of an algorithm for crop row detection according to an example implementation.

Crops in the crop rows in an embodiment of the present disclosure are lowland rice. However, crops are not limited to lowland rice. Methods of crop row detection according to embodiments of the present disclosure are suitably applicable to the detection of crop rows of any crops other than those which are cultivated through broadcast seeding.

A method of detecting a plurality of crop rows in a field according to an embodiment of the present disclosure is implemented in a computer, such as the processing unit of a server as described above. The method causes the computer to execute: acquiring an image of a field as viewed from above (step S10); from the image, generating a vegetated area image into which a vegetated area including the plurality of crop rows is extracted (step S20); along N summation lines in the vegetated area image, taking a sum of pixel values of pixels of the vegetated area image to derive N summation values associated with the N summation lines (step S30); applying a filter to a linear array storing the N summation values and performing a convolution operation to derive N weighted summation values (step S40); and detecting the plurality of crop rows based on the N weighted summation values (step S50).

(step S10)

The processing unit acquires an image of a field including a plurality of crop rows as viewed from above.

For example, the processing unit acquires an image of the field as viewed from above by accessing the storage device **130** of the server **100** and reading out remote sensing image data that is stored in the storage device **130**. Hereinafter, the image of the field as viewed from above is referred to as an "input image" to the system.

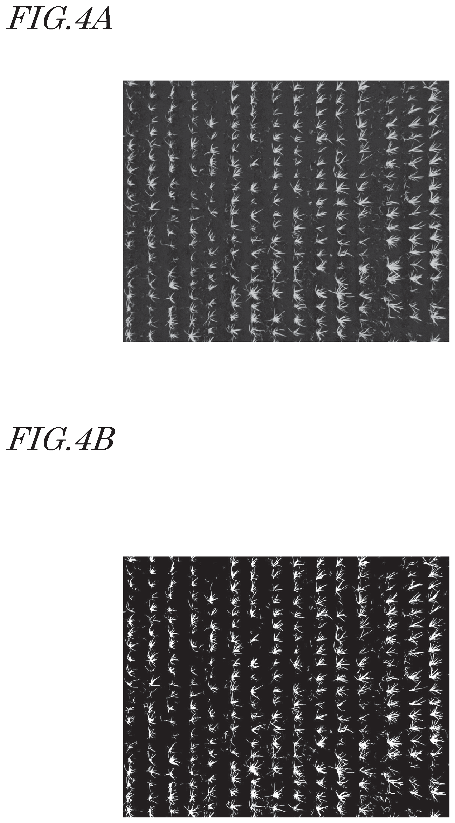

Without being limited to a remote sensing image, the input image may be a plan view image (or an overhead view image) of the ground surface as viewed from above, obtained through e.g. homography transformation (planar perspective projection) of an image acquired by imaging a cultivated land from obliquely above with a camera that is mounted on an agricultural machine (e.g., a tractor). Alternatively, the storage device **130** of the server **100** as described above may store data of a field map that contains positional information of seedlings which are planted in the field. In this case, by allowing positional information of the seedlings indicated by the data of the field map to be visualized, the processing unit can generate an image that is comparable to a remote sensing image or a plan view image. An image thus generated is also an example of an input image. FIG. **4A** shows an example of an input image (multispectral image) including rows of lowland rice.

(step S20)

Then, from the input image, the processing unit generates a vegetated area image into which a vegetated area including the plurality of crop rows is extracted. In other words, the processing unit applies preprocessing to the input image in order to generate a vegetated area image into which a vegetated area including the plurality of crop rows is extracted. FIG. **4B** shows an example of a vegetated area image including a vegetated area which is rows of lowland rice. The preprocessing includes Lab conversion, Otsu's method of binarization, adaptive binarization, use of deep learning, Gaussian filters, and dilation and erosion processing, for example.

When the input image is a multispectral image, the processing unit generates a vegetated area image by applying Lab conversion and Otsu's method of binarization to the input image in this order, for example. Alternatively, the processing unit may generate a vegetated area image by applying a Gaussian filter and adaptive binarization to the input image in this order. Preferably, until a mean value of the pixels in the image falls within a predetermined range, the processing unit keeps applying dilation and erosion processing to the binary image that has undergone Otsu's method of binarization or adaptive binarization. By applying dilation and erosion processing, it becomes possible to enhance the accuracy of crop row detection discussed below, irrespective of the growth state or growth period of the crop.

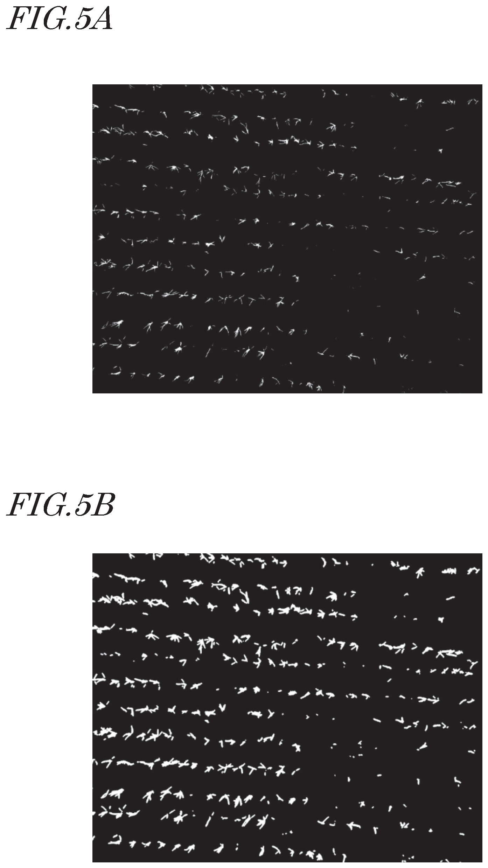

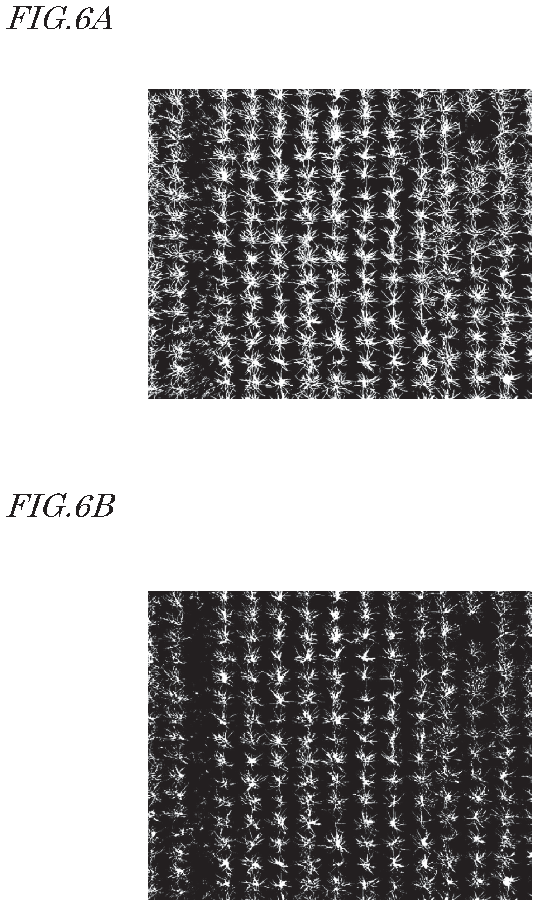

FIG. **5A** shows an example of an input image before preprocessing, and FIG. **5B** shows an example of a binary image after preprocessing. FIG. **6A** shows another example of an input image before preprocessing, and FIG. **6B** shows another example of a binary image after preprocessing. Both of the binary images shown in FIG. **5B** and FIG. **6B** are images that have undergone dilation and erosion processing.

Examples of deep learning are segmentation (division into regions) such as semantic segmentation, instance segmentation, and panoptic segmentation which integrate the two foregoing algorithms. By applying e.g. semantic segmentation to the input image instead of binarization, the processing unit can classify the content of the input image into two classes, i.e., regions of vegetated areas and regions other than vegetated areas.

(step S30)

Then, along the N summation lines in the vegetated area image, the processing unit takes a sum of pixel values of pixels of the vegetated area image to derive N summation values associated with the N summation lines. The N summation lines will be described in detail later.

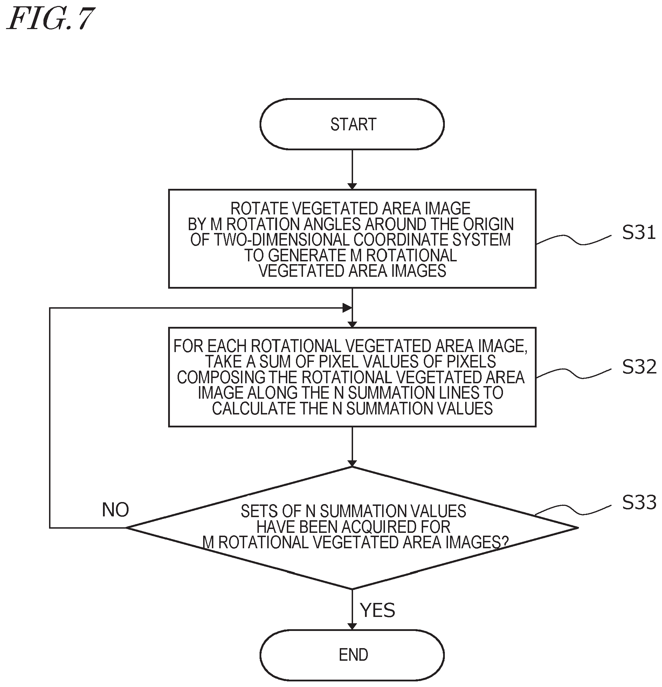

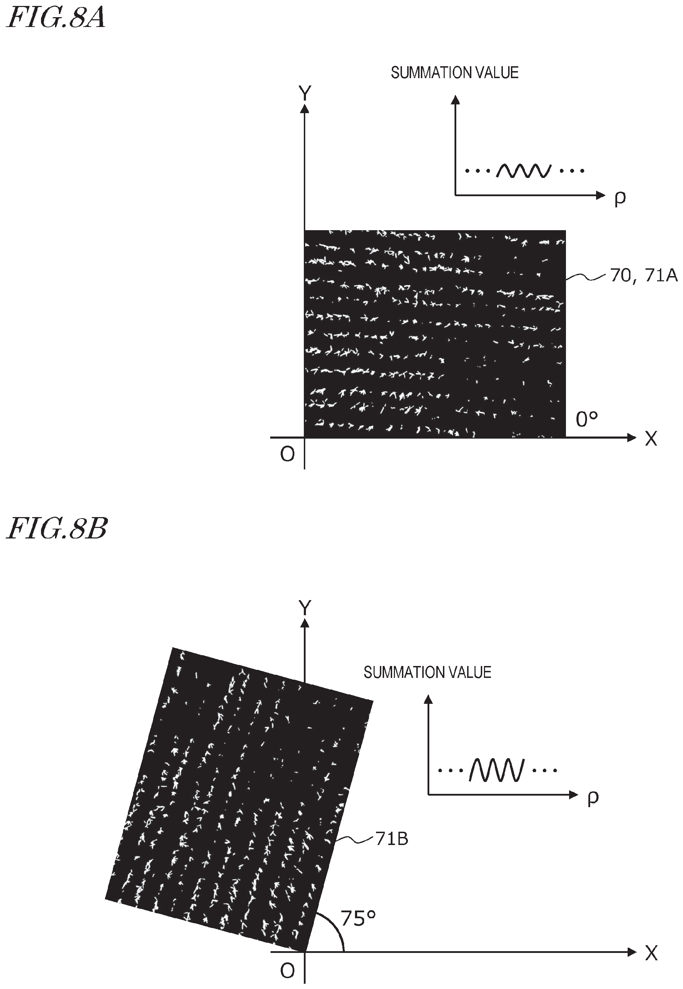

FIG. **7** is a flowchart showing a specific example of a processing procedure included in step **S30**. FIG. **8A** to FIG. **8D** are each a diagram showing an example of a rotational vegetated area image which is obtained by rotating a vegetated area image by a certain rotation angle around the origin of a two-dimensional coordinate system.

First, the processing unit rotates the vegetated area image **70** around the origin **O** of a two-dimensional coordinate system by a plurality of rotation angles, to generate a plurality (M: where M is an integer of 2 or greater) of rotational vegetated area images **71** (step S31). The two-dimensional coordinate system is defined by a first axis and a second axis that is orthogonal to the first axis. In the examples shown FIG. **8A** to FIG. **8D**, the Y axis is the first axis, and the X axis is the second axis.

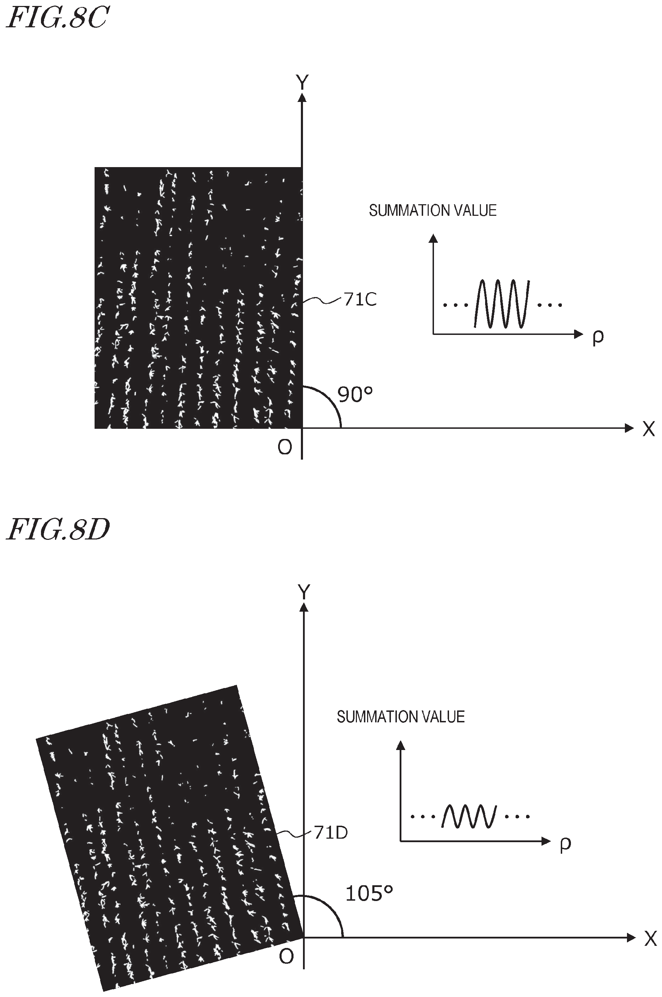

FIG. **8A** shows a rotational vegetated area image **71A** obtained by rotating the vegetated area image **70** counterclockwise by a rotation angle of 0° around the origin **O** of the two-dimensional coordinate system. In other words, the original vegetated area image **70** before the rotation is shown. FIG. **8B** shows a rotational vegetated area image **71B** obtained by rotating the vegetated area image **70** counterclockwise by a rotation angle of 75° around the origin **O**. FIG. **8C** shows a rotational vegetated area image **71C** obtained by rotating the vegetated area image **70** counterclockwise by a rotation angle of 90° around the origin **O**. FIG. **8D** shows a rotational vegetated area image **71D** obtained by rotating the vegetated area image **70** counterclockwise by a rotation angle of 105° around the origin **O**.

The processing unit may generate 360 (180/0.5) rotational vegetated area images **71** by rotating the vegetated area image **70** counterclockwise by every 0.5°, for example. Alternatively, the processing unit may generate 180 (180/1) rotational vegetated area images **71** by rotating the vegetated area image **70** counterclockwise by every 1°, for example. However, there is no particular limitation as to the rotation angle.

The processing unit according to an embodiment of the present disclosure generates a frequency spectral image by applying a discrete Fourier transform (DFT) to a vegetated area image, and, from the spectral image, estimates an angle in the two-dimensional coordinate system between a direction in which the plurality of crop rows extend and the first axis.

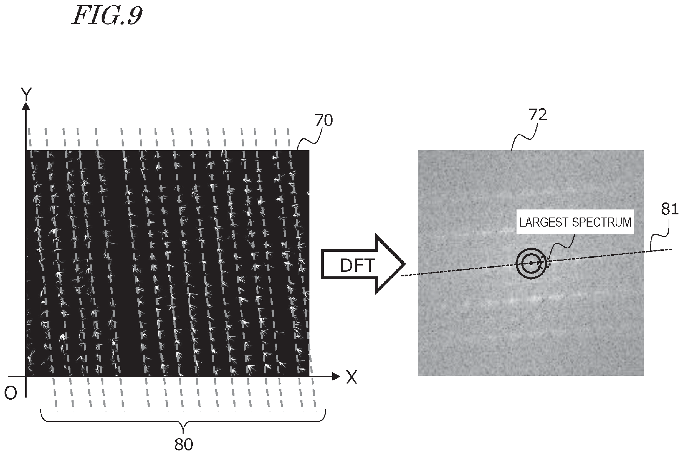

FIG. 9 is a diagram showing an example of a frequency spectral image that is generated by applying a DFT to a vegetated area image. In FIG. 9, a vegetated area image 70 is shown on the left-hand side, and an example of a spectral image 72 is shown on the right-hand side. In the vegetated area image 70 shown in FIG. 9, a plurality of lines 80 extending along the plurality of crop rows are indicated with broken lines. For simplicity, the plurality of lines 80 are illustrated as all parallel; in other words, the angle of intersection between each line 80 and the Y axis appears identical. However, in reality, the directions in which the crop rows extend may be various.

In the spectral image 72 shown in FIG. 9, a line 81 extending in a direction that intersects the direction in which the plurality of lines 80 extend is indicated with a dotted line. In the spectral image 72, there is less change in luminance along the direction in which the lines 80 of the crop rows extend and more change along the line 81 extending in a direction that intersects the direction in which the lines 80 extend, and therefore the amplitude of the high-frequency region is greater in the direction in which the line 81 extends. Theoretically, change in the luminance becomes greatest along a line 81 that extends in an orthogonal direction to the direction in which the lines 80 extend, and therefore the amplitude of the high-frequency region is greatest in that direction.

By applying a two-dimensional DFT to the vegetated area image 70, from the spectral image 72 the processing unit takes a sum of frequency spectra, which are in accordance with the distance between adjacent crop rows, by every certain angle (e.g. 3.0°). In the example shown in FIG. 9, as a result of summation of the frequency spectrum by every certain angle, the processing unit determines that a summation value of frequency spectra taken along the direction in which the line 81 extends is the largest among the plurality of summation values. From the direction in which the line 81 extends, the processing unit can estimate an angle in the two-dimensional coordinate system between a direction in which the plurality of crop rows extend and the X axis or the Y axis. In this manner, from the spectral image, the processing unit is able to narrow down the direction in which the crop rows extend based on the interval between crop row that may be set at the time of transplantation, for example.

In an embodiment of the present disclosure, furthermore, the processing unit may determine a plurality of rotation angles by referring to the estimated angle, and rotate the vegetated area image by the plurality of rotation angles around the origin of the two-dimensional coordinate system to generate a plurality of rotational vegetated area images. For example, in a ±5° range within the estimated angle, the processing unit rotates the vegetated area image by every 0.5° to generate 21 rotational vegetated area images. By narrowing down the candidates of the plurality of rotation angles based on the estimated angle, it becomes possible to reduce the number of rotational vegetated area images to be generated, thereby decreasing the computational load for summation values of pixels along lines as described below.

Next, for each of the M rotational vegetated area images 71, the processing unit takes a sum of pixel values of pixels composing the rotational vegetated area image 71 along N summation lines to derive N summation values (step S32).

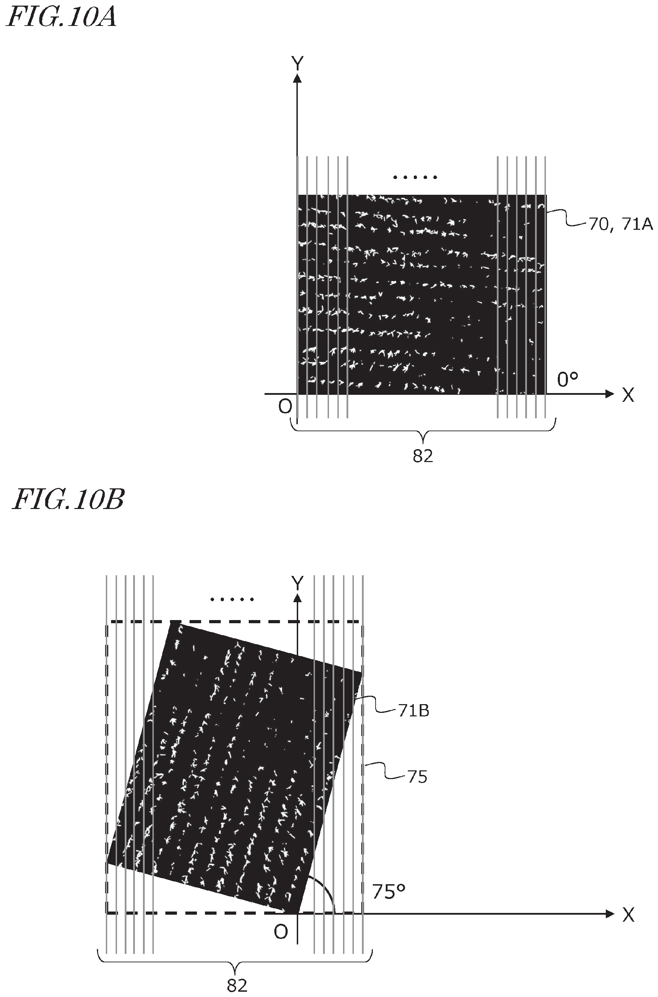

FIG. 10A is a schematic diagram illustrating a plurality of summation lines 82 in the vegetated area image 70 or the rotational vegetated area image 71A shown in FIG. 8A. FIG. 10B is a schematic diagram illustrating a plurality of summation lines 82 in the rotational vegetated area image 71B shown in FIG. 8B.

As shown in FIG. 10A, the plurality of (N: where N is an integer of 2 or greater) of summation lines 82 extending in parallel to the Y axis being the first axis are drawn at equal intervals on the image. For example, if the image size is 1920 × 1080, then corresponding to the number 1080 of pixels existing along the X axis direction there may be 1080 summation lines 82 drawn on the 1080 pixels at equal intervals. As for the rotational vegetated area image, too, a plurality of summation lines 82 extending in parallel to the Y axis being the first axis can be drawn on the image. As is illustrated in FIG. 10B, a number N of summation lines 82 as determined according to the lateral size of a circumscribed rectangle 75 for the rotational vegetated area image 71B along the X axis direction are drawn on the rotational vegetated area image 71B at equal intervals.

For each of the M rotational vegetated area images 71, the processing unit takes a sum of pixel values of pixels composing the rotational vegetated area image 71 along the N summation lines 82 to derive N summation values. Thus, the processing unit derives a summation value by, along each summation line, performing summation across the number of pixels in the longitudinal direction of the rotational vegetated area image. As described above, when the rotational vegetated area image or the vegetated area image is a binary image, the summation value of pixel values along a summation line equals the total number of pixels corresponding to blanks existing along that summation line. As is illustrated in FIG. 10B, when taking a sum of pixel values along the summation lines 82 in the rotational vegetated area image 71, in any region of the circumscribed rectangle 75 that does not belong to the rotational vegetated area image 71, the processing unit places dummy pixels having a pixel value of 0 at coordinates that are determined based on the pixels composing rotational vegetated area image **71**. Then, the processing unit takes a sum of pixel values of pixels including the dummy pixels along the summation line **82**. The processing unit stores the derived N summation values to a linear array.

FIG. **8A** to FIG. **8D** are referred to again. Each of FIG. **8A** to FIG. **8D** illustrates a portion of a waveform as a plotting of N summation values along the N summation lines. The vertical axis represents the summation value, whereas the horizontal axis represents the X coordinate of the summation line **82**, i.e., an intersection $\rho$ of the summation line **82** and the X axis. Among the rotational vegetated area images **71A** to **71D**, the waveform of summation values obtained from the rotational vegetated area image **71C** has the largest amplitude, while the waveform of summation values obtained from the rotational vegetated area image **71A** or the original vegetated area image **70** has the smallest amplitude. Thus, the amplitude of the waveform changes in accordance with the rotation angle of the image.

As shown in FIG. **7**, until acquiring sets of N summation values for the M rotational vegetated area images **71**, the processing unit repeatedly performs the process of step **S32** (step S33). In other words, until all N summation values for the M rotational vegetated area images **71** are acquired, the processing unit repeatedly performs the process of step **S32**.

(step S40)

Then, for each of the plurality of rotational vegetated area images **71**, the processing unit applies a filter to a linear array storing the N summation values and performs a convolution operation (moving average or weighted average) to derive N weighted summation values.

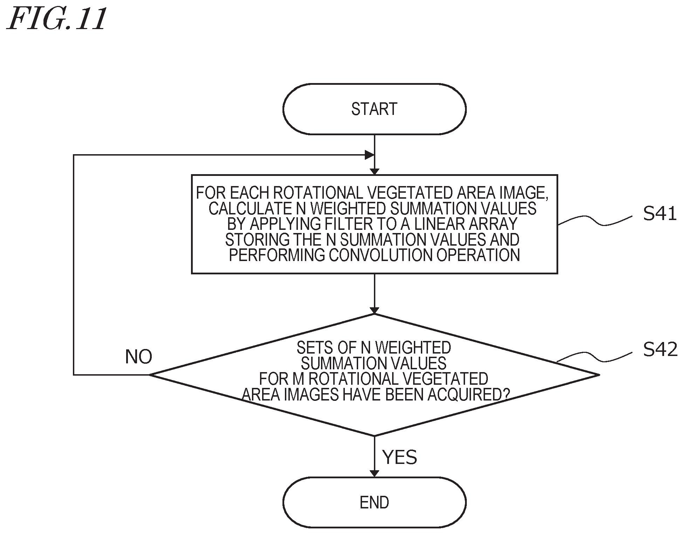

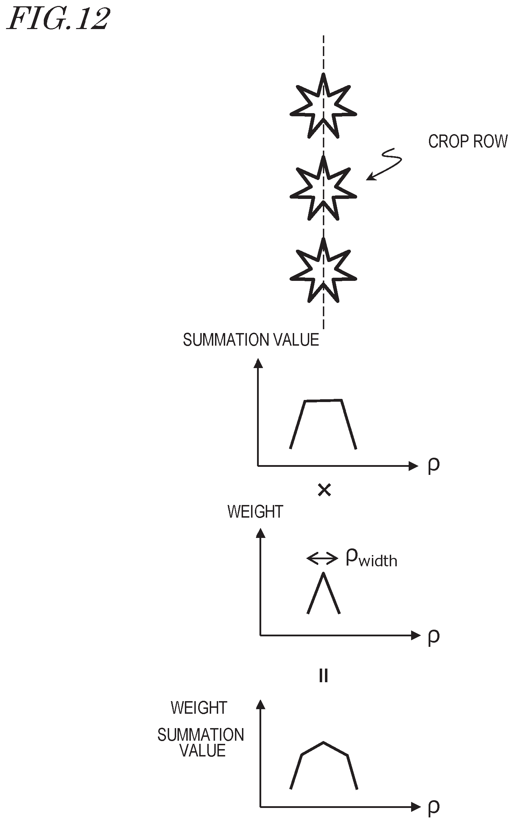

FIG. **11** is a flowchart showing a specific example of a processing procedure included in step **S40**. FIG. **12** is a schematic diagram for describing a convolution operation.

For each of the M rotational vegetated area images **71**, the processing unit applies a filter to a linear array storing the N summation values and performs a convolution operation to derive N weighted summation values (step S41).

In an embodiment of the present disclosure, as is illustrated in FIG. **12**, weighting is performed such that a greater weight is applied toward the center of a crop. With such weighting, it is possible to accurately detect the center of a crop row. By being able to accurately detect the center of a crop row, it is possible to improve the accuracy of crop row detection. An example of a filter for use in a convolution operation is a linear filter or a Gaussian filter. FIG. **12** shows an example of a linear filter.

The shape and size of a crop varies depending on the kind of crop. Different growth stages of crops may lead to different shapes and sizes of crops. The weight of a filter according to an embodiment of the present disclosure may differ depending on the kind of crop or the growth stage of the crop. Also, the size $\rho_{width}$ of the filter may differ depending on the kind of crop or the growth stage of the crop. For example, the system **1000** may manage a work plan including information of the kind of crop. Data of the work plan may be stored in the storage device **130** of the server **100**, for example. Data of a table describing a relationship between the kind of crop or the growth stage of the crop and the weight and size may be stored in the storage device **130**. The processing unit may acquire the data of the work plan and the table from the storage device **130**, and by referring to the table, determine the weight or size of the filter in accordance with the information of the kind of crop included in the work plan data. Moreover, the processing unit may estimate the stage from the date or year/month information managed by the system **1000**, and determine the weight or size of the filter based on the result of estimation, for example. Alternatively, the weight and size of the filter may be set as the user controls the terminal(s) **200** and inputs them to the system **1000**.

Because of changing the size or weight of the filter in accordance with the kind of crop or the growth stage of the crop, effects of changes in the environment, e.g., the kind of crop or the growth stage of the crop, on the crop row detection can be reduced, whereby the accuracy and robustness of crop row detection can be improved.

The processing unit repeatedly performs the process of step **S41** until acquiring the sets of N weighted summation values for the M rotational vegetated area images **71** (step S42). In other words, the processing unit repeatedly performs the process of step **S41** until all N weighted summation values for the M rotational vegetated area images **71** are acquired.

(step S50)

The flowchart of FIG. **3** is referred to again. The processing unit detects a plurality of crop rows based on the sets of N weighted summation values derived from the plurality of rotational vegetated area images **71,** as acquired in step **42**.

A weighted summation value in an embodiment of the present disclosure is expressed by a function $f(\theta, \rho)$. As mentioned above, $\theta$ and $\rho$ are the rotation angle and the X coordinate of a summation line **82,** respectively.

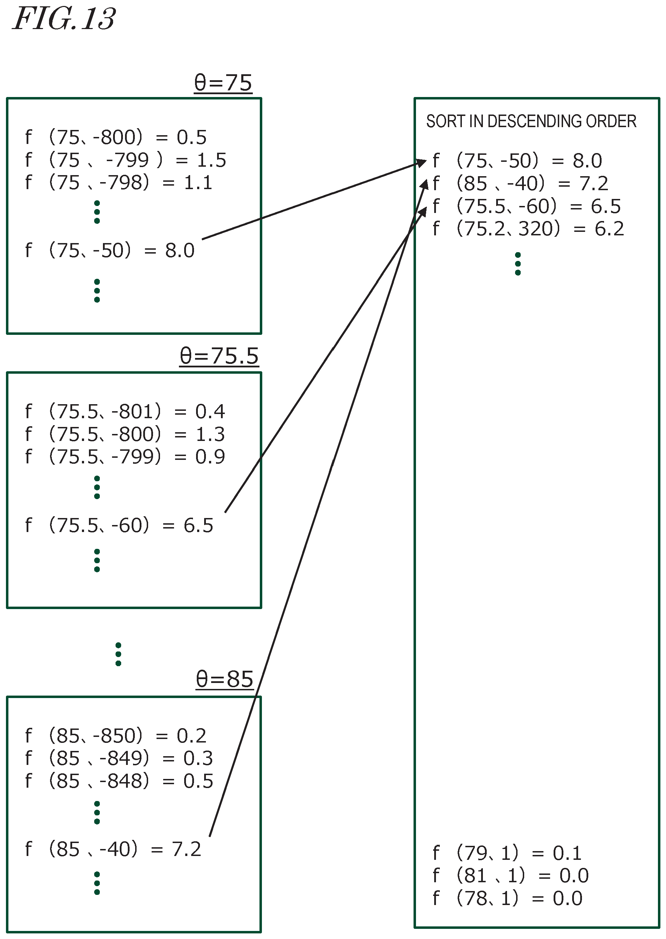

FIG. **13** is a schematic diagram showing schematically a list which is obtained by sorting in descending order the N weighted summation values for each rotational vegetated area image that are included in the set of weighted summation values. When there is a total of M rotational vegetated area images, the processing unit sorts

$$\sum_{i=1}^{M} N(i)$$

weighted summation values in descending order.

It is assumed that the angle that is estimated by the processing unit at step **S30** is 80°. In FIG. **13**, N weighted summation values that are obtained from each rotational vegetated area image **71** as rotated by every 0.5° in a ±5° range within the angle of 80° (i.e. 75° ≦θ≦85°) are expressed by the function f(θ, ρ). In this example, the number M of rotational vegetated area image is 21. The processing unit according to an embodiment of the present disclosure sorts in descending order the N weighted summation values for each of the M rotational vegetated area images **71** that are included in the set of weighted summation values, and generates a list that is obtained from the sorted result. The processing unit may adopt weighted summation values in descending order from the top of the list, for example.

In the list illustrated in FIG. **13**, a function f(75, -50)=8.0 expressing a weighted summation value for a rotation angle θ=75 and an X coordinate of the summation line =-50 is placed the topmost, followed by a function f(85, -40)=7.2 expressing a weighted summation value for a rotation angle θ=85 and an X coordinate of the summation line =-40, and further followed by a function f(75.5, -60)=6.5 expressing a weighted summation value for a rotation angle θ=75.5 and an X coordinate of the summation line =-60. In descending order from the top of the list, the processing unit adopts the weighted summation values of the function f(75, -50), the function f(85, -40), and the function f(75.5, -60). In adopting a weighted summation value, the processing unit may apply constraints that are based on the list.

The processing unit according to an embodiment of the present disclosure estimates that, in a rotational vegetated area image **71** associated with a rotation angle θ indicated in the adopted function f(θ, ρ), a crop row exists that is formed along a summation line being located on coordinate ρ. For example, among the plurality of crop rows, the processing unit identifies a crop row that corresponds to one function f(θ, ρ). Eventually, by using a result of crop row estimation as estimated from one function f(θ, ρ) based on the rotational vegetated area image **71**, the processing unit can acquire positional information of a crop row existing in the vegetated area image or input image, and detect the crop row based on the positional information.

According to an embodiment of the present disclosure, an angle of intersection between the direction in which the crop row extends and the X axis or the Y axis is determined on a crop-row-by-crop-row basis, whereby a direction in which the plurality of crop rows extend can be detected with a high precision in the vegetated area image or input image. In particular, even if an error occurs in the generation of a vegetated area image in the process of step **S20**, a robust crop row detection can be realized through subsequent processing.

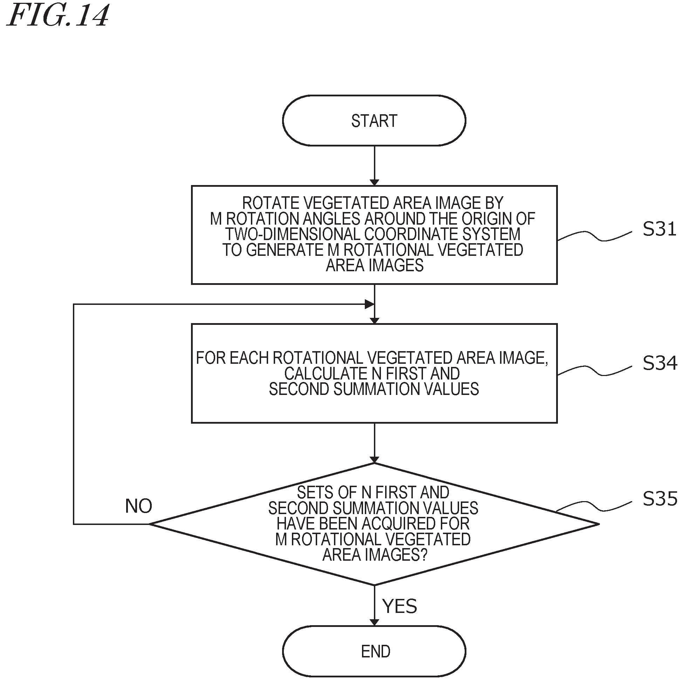

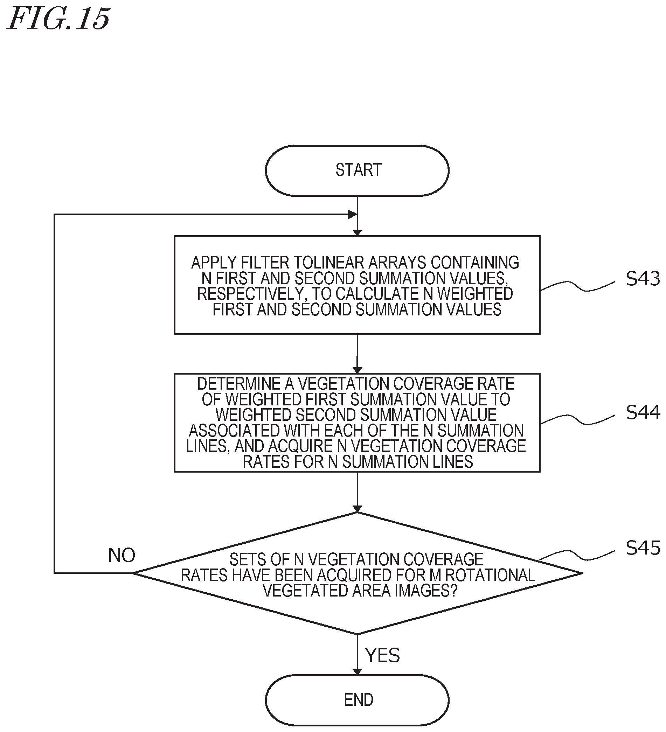

With reference to FIG. **14** and FIG. **15**, another example implementation of the method of crop row detection will be described. The processing unit can detect crop rows based on a vegetation coverage rate, rather than a set of weighted summation values. Among steps **S10** to **S50** in the processing procedure shown in FIG. **3**, the processes of steps **S30** and **S40** differ from the processes in the aforementioned example implementation. Hereinafter, the differences will be described in detail.

FIG. **14** is a flowchart showing a specific example of a processing procedure included in step **S30** according to another example implementation. FIG. **15** is a flowchart showing a specific example of a processing procedure included in step **S40** according to another example implementation.

After generating M rotational vegetated area images by performing the process of step **S31** as described above, the processing unit calculates N first and second summation values for each rotational vegetated area image (step S34). To describe this specifically, for each of the M rotational vegetated area images **71**, the processing unit takes a sum of pixel values of pixels composing the rotational vegetated area image **71** along each summation line to derive a first summation value, and takes a sum of number of pixels in the rotational vegetated area image that are located on each summation line to derive a second summation value, thereby acquiring N first summation values and N second summation values, respectively. The N first summation values correspond to the aforementioned N summation values. When the vegetated area image is a binary image, the first summation value corresponds to the number of pixels that belong to a vegetated area, whereas the second summation value corresponds to the number of pixels that are located on a summation line, including the number of pixels that do not belong to a vegetated area.

As shown in FIG. **14**, the processing unit repeatedly performs the process of step **S34** until acquiring sets of N first summation values and N second summation values for the M rotational vegetated area images **71** (step S35).

Then, as shown in FIG. **15**, for each rotational vegetated area image **71**, the processing unit applies a filter to linear arrays including the N first summation values and the N second summation values, respectively, and performs a convolution operation, thereby deriving N weighted first summation values and N weighted second summation values (step S43).

Next, the processing unit determines a vegetation coverage rate of the weighted first summation value to the weighted second summation value associated with each of the N summation lines, and acquires N vegetation coverage rates for the N summation lines (step S44). The vegetation coverage rate is expressed as a ratio of: weighted first summation value/weighted second summation value. The processing unit determines a vegetation coverage rate for each summation line to acquire N vegetation coverage rates for the N summation lines.

As shown in FIG. **15**, the processing unit repeatedly performs the processes of step **S43** and **S44** until acquiring sets of N vegetation coverage rates for the M rotational vegetated area images **71** (step S45). In other words, the processing unit repeatedly performs the processes of step **S43** and **S44** until all N vegetation coverage rates for the M rotational vegetated area images **71** are acquired.

Thus, the processing unit may detect a plurality of crop rows based on sets of N vegetation coverage rates that are derived from a plurality of rotational vegetated area images. Even in the case where an image rotation process is involved as in the example implementations of the present disclosure, use of a vegetation coverage rate allows for improving the accuracy of crop row estimation based on rotational images.

[3. example implementation of an algorithm for detecting weeds growing in between crop rows]

The above-described method may further include, after detecting crop rows, a step of identifying a region between adjacent crop rows based on a result of detecting the crop rows, and transmitting to an agricultural machine an instruction for pest control when weeds growing in the identified region are detected.

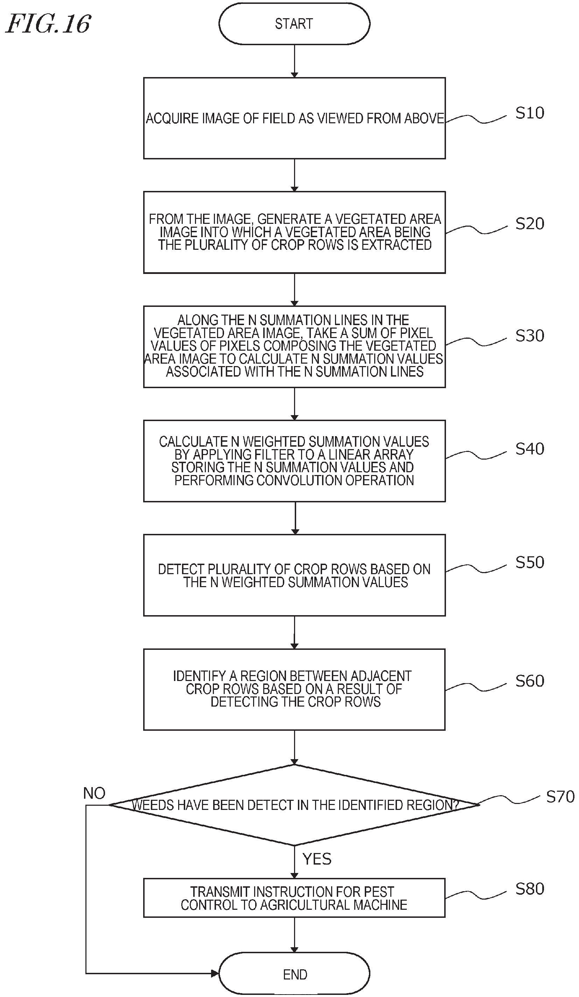

FIG. **16** is a flowchart showing a processing procedure of an algorithm of transmitting an instruction for pest control to an agricultural machine upon detection of weeds, according to an example implementation.

The processing procedure shown in FIG. **16** includes processes of steps **S10** to **S80**. Among steps **S10** to **S80**, the processes of steps **S10** to **S50** are as have been described with reference to FIG. **3**. Hereinafter, specific processes of steps **S60**, **S70**, and **S80** will be described.

The processing unit may be configured to, after detecting crop rows, identify a region between adjacent crop rows based on a result of detecting the crop rows, and to transmit to an agricultural machine an instruction for pest control when weeds growing in the identified region are detected, in accordance with the procedure of steps **S10** to **S50**.

(step S60)

The processing unit identifies a region between adjacent crop rows based on a result of detecting the crop rows. For example, from a vegetated area image, the processing unit identifies a region that is located between two detection lines extending along adjacent crop rows.

(step S70)

The processing unit detects weeds growing in the region identified in step **S60**. As mentioned above, the crop in an embodiment of the present disclosure is lowland rice. Barnyard grass may grow as weeds in regions between rows of lowland rice. The shape of lowland rice is very similar to the shape of barnyard grass. Among others, barnyard grass before heading is difficult to distinguish from lowland rice.

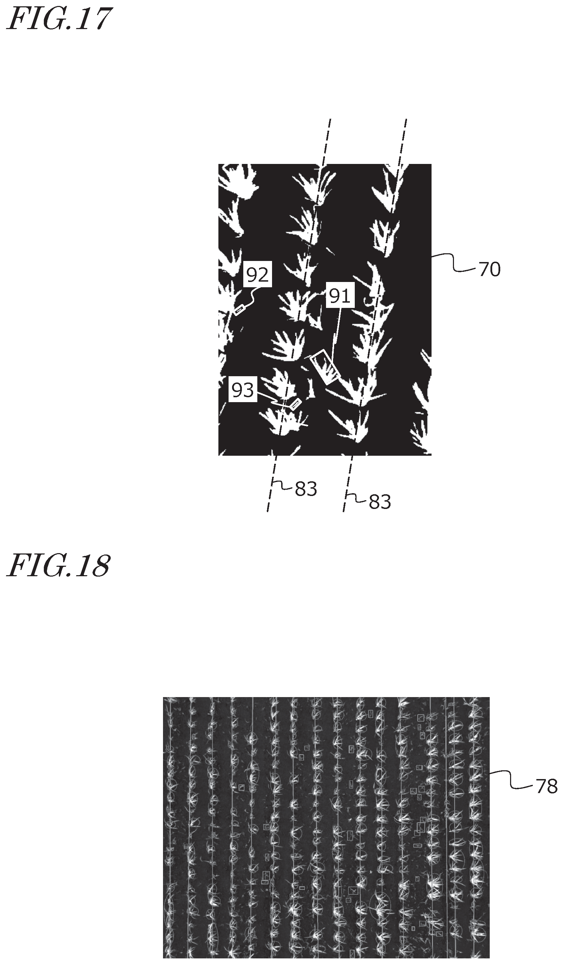

FIG. **17** is a partial enlarged view of the vegetated area image **70**. FIG. **18** is a diagram illustrating a detection result image which indicates a result of detecting crop rows and weeds.

The processing unit according to an embodiment of the present disclosure applies a labeling process to the vegetated area image **70** to generate a labeling image. Prior to applying a labeling process to the vegetated area image, the processing unit may apply a dilation process. The dilation process can improve the accuracy of weed detection. From the labeling image, the processing unit determines a pixel region composed of one or more connected components (hereinafter referred to as a "connected region") that exists in the region identified in step **S60**. The processing unit detects weeds growing in the identified region based on, for example, a shape characteristic parameter that characterizes the shape of the connected region.

Examples of shape characteristic parameters include barycentric coordinates of the shape of the connected region and the geometric area of the connected region. For example, the processing unit compares against a threshold a distance from the barycentric coordinates of the shape of the connected region to a crop row, and detects weeds based on the result of comparison. This threshold may be determined by feeding a learning data set to a decision tree for learning, for example. In another example, the processing unit may compare the geometric area of the connected region against a threshold, and detect weeds based on the result of comparison.

FIG. **17** shows objects which may be candidates of weeds having been detected in regions between detection lines **83** of crop rows. For example, as for an object **91**, the processing unit determines the object **91** as weeds based on a result of comparison of the shape characteristic parameter against the threshold. As for an object **92**, the geometric area of the connected region is smaller than the threshold. In this case, the processing unit determines the object **92** as noise, for example. As for an object **93**, the distance from the barycentric coordinates of the shape of the connected region to the crop row is smaller than the threshold. In this case, the processing unit determines that the object **93** is located close to a lowland rice, and determines the object **93** as lower leaves of lowland rice, for example, thus eliminating it from candidates of weeds.

As for weeds that allow themselves to be distinguished from crops through visual inspection, a machine learning model for object detection could be used, for example. However, as mentioned above, the shape of lowland rice is very similar to the shape of barnyard grass, which makes it very difficult to distinguish between lowland rice and barnyard grass. Even if a machine learning model for object detection were used for the detection of barnyard grass, the result would be the same as in visual-inspection based distinction. On the other hand, according to the embodiment of the present disclosure, even in a case where visual inspection has difficulty in distinguishing between crops and weeds, weeds can be accurately detected. For example, distinction between lowland rice and barnyard grass, or distinction between lowland rice and weedy rice can be facilitated.

As is illustrated in FIG. **18**, the processing unit may superpose a rectangular region that abuts with the detection lines of crop rows, and/or the connected regions of weeds on the vegetated area image to generate a detection result image **78**, and cause the display device **220** of the terminal(s) **200** to display the detection result image **78**, for example. Alternatively, the processing unit may store data of the detection result image **78** to the storage device **130** of the server **100,** for example.

(step S80)

If the processing unit detects weeds in step **S70**, an instruction for pest control is transmitted to an agricultural machine such as a pest control machine. In response to the instruction for pest control transmitted from the processing unit, the agricultural machine performs an operation for pest control. The agricultural machine is capable of manned or unmanned driving, and can perform either one of manual driving or self-driving. For example, an agricultural machine that is capable of self-driving may automatically begin an operation for pest control, in response to the instruction for pest control transmitted from the processing unit.

With an agricultural assistance system according to an embodiment of the present disclosure, the accuracy and robustness of crop row detection can be improved. For example, all of the crop rows that are included in a multispectral image acquired through drone imaging from above a field can be detected at once in a crop-row-by-crop-row manner.

Agricultural assistance systems and methods of crop row or weeds detection according to embodiments of the present disclosure are applicable also to crops other than lowland rice, e.g., vegetables such as soybean or cabbage.

In the case of a crop other than lowland rice, it is conceivable to identify crop rows first with the techniques of the present disclosure, and then determine a growth status by observing temporal changes in the vegetated area of the crop, or determine any vegetated area other than the crop as weeds. In that case, the result of determination may be utilized in identifying places of insufficient growth or places plagued with weeds, thus to adopt preventive measures. Moreover, growth status can also be utilized as source of information for yield prediction. In other examples, in a field where a system of crop rotation is implemented, a crop that was being cultivated in the preceding period may also grow in the current period. In that case, prevalence of pests and diseases via the crop from the preceding period and/or nutrient competition may possibly lead to an insufficient growth of the crop of the current period. However, use of the techniques of crop row detection according to the present disclosure will allow for early detection of an emergence of the crop from the preceding period, thus enabling preventive measures to be taken.

A system that provides the various functions according to an embodiment of the present disclosure can be mounted on an agricultural machine lacking such functions as an add-on. Such a system may be manufactured and sold independently from the agricultural machine. A computer program for use in such a system may also be manufactured and sold independently from the agricultural machine. The computer program may be provided as being stored on a computer-readable, non-transitory storage medium, for example. The computer program may also be provided through downloading via telecommunication lines (e.g., the Internet).

Thus, the present disclosure encompasses agricultural assistance systems and methods of crop row detection as recited in the following Items.

[Item 1]

An agricultural assistance system comprising a processing unit to process an image of a field including a plurality of crop rows as viewed from above, and to detect the plurality of crop rows, wherein
the processing unit is configured to:

> from the image, generate a vegetated area image into which a vegetated area including the plurality of crop rows is extracted;
> along N summation lines, where N is an integer of 2 or greater, in the vegetated area image, take a sum of pixel values of pixels of the vegetated area image to derive N summation values associated with the N summation lines;
> apply a filter to a linear array storing the N summation values and perform a convolution operation to derive N weighted summation values; and
> detect the plurality of crop rows based on the N weighted summation values.

[Item 2]

The agricultural assistance system of Item 1, wherein a weight of the filter differs depending on a kind of crop or a growth stage of the crop.

[Item 3]

The agricultural assistance system of Item 1, wherein a size of the filter differs depending on a kind of crop or a growth stage of the crop.

[Item 4]

The agricultural assistance system of any one of Items 1 to 3, wherein the filter is a linear filter or a Gaussian filter.

[Item 5]

The agricultural assistance system of any one of Items 1 to 4, wherein:

the processing unit rotates the vegetated area image by a plurality of rotation angles around an origin of a two-dimensional coordinate system that is defined by a first axis that is parallel to a direction in which the N summation lines extend and a second axis that is orthogonal to the first axis to generate a plurality of rotational vegetated area images;
for each of the plurality of rotational vegetated area images,

the processing unit takes a sum of pixel values of pixels composing the rotational vegetated area image along the N summation lines to derive the N summation values;
the processing unit applies the filter to the linear array storing the N summation values and performs a convolution operation to derive the N weighted summation values; and

the processing unit detects the plurality of crop rows based on sets of N weighted summation values derived from the plurality of rotational vegetated area images.

[Item 6]

The agricultural assistance system of any one of Items 1 to 4, wherein:

the processing unit rotates the vegetated area image by a plurality of rotation angles around an origin of a two-dimensional coordinate system that is defined by a first axis that is parallel to a direction in which the N summation lines extend and a second axis that is orthogonal to the first axis to generate a plurality of rotational vegetated area images;
for each of the plurality of rotational vegetated area images,

the processing unit takes a sum of pixel values of pixels composing the rotational vegetated area image along each summation line to derive a first summation value, and takes a sum of a number of pixels in the rotational vegetated area image that are located on each summation line to derive a second summation value, to acquire N first summation values and N second summation values, respectively;
the processing unit

applies the filter to linear arrays storing the N first summation values and the N second summation values, respectively, and performs a convolution operation to derive N weighted first summation values and N weighted second summation values; and

the processing unit determines a vegetation coverage rate of the weighted first summation value to the weighted second summation value associated with each of the N summation lines, and acquires N vegetation coverage rates for the N summation lines; and

the processing unit detects the plurality of crop rows based on sets of N vegetation coverage rates derived from the plurality of rotational vegetated area images.

[Item 7]

The agricultural assistance system of Item 5 or 6, wherein the processing unit applies a discrete Fourier transform to the vegetated area image to generate a frequency spectral image, and, from the spectral image, estimates an angle in the two-dimensional coordinate system between a direction in which the plurality of crop rows extend and the first axis.

[Item 8]

The agricultural assistance system of Item 7, wherein the processing unit determines the plurality of rotation angles by referring to the estimated angle, and rotates the vegetated area image by the plurality of rotation angles around the origin of the two-dimensional coordinate system to generate the plurality of rotational vegetated area images.

[Item 9]

The agricultural assistance system of any one of Items 1 to 8, wherein the processing unit generates the vegetated area image into which the vegetated area is extracted by applying an Lab conversion or deep learning to the image.

[Item 10]

The agricultural assistance system of Item 1, wherein the processing unit is further configured to identify a region between adjacent crop rows based on a result of detecting the crop rows, and to transmit an instruction for pest control when weeds growing in the identified region are detected.

[Item 11]

The agricultural assistance system of Item 10, wherein

the processing unit applies a labeling process to the vegetated area image to generate a labeling image; from the labeling image, the processing unit determines a pixel region composed of one or more connected components, the pixel region existing in the identified region; and
the processing unit detects the weeds growing in the identified region based on a shape characteristic parameter that characterizes a shape of the pixel region.

[Item 12]

The agricultural assistance system of Item 10 or 11, comprising an agricultural machine to perform an operation for pest control in response to the instruction for pest control transmitted from the processing unit.

[Item 13]

The agricultural assistance system of any one of Items 1 to 12, wherein crops in the crop row are lowland rice, and the weeds are barnyard grass.

[Item 14]

The agricultural assistance system of any one of Items 1 to 13, comprising an unmanned aerial vehicle to image the field from above the field to acquire a multispectral image.

[Item 15]

A computer-implemented method of detecting a plurality of crop rows in a field, the method causing a computer to execute:

acquiring an image of the field as viewed from above;
from the image, generating a vegetated area image into which a vegetated area including the plurality of crop rows is extracted;
along N summation lines, where N is an integer of 2 or greater, in the vegetated area image, taking a sum of pixel values of pixels of the vegetated area image to derive N summation values associated with the N summation lines;
applying a filter to a linear array storing the N summation values and performing a convolution operation to derive N weighted summation values; and
detecting the plurality of crop rows based on the N weighted summation values.

[Item 16]

The method of Item 15, wherein a weight of the filter differs depending on a kind of crop or a growth stage of the crop.

[Item 17]

The method of Item 15, wherein a size of the filter differs depending on a kind of crop or a growth stage of the crop.

[Item 18]

The method of any one of Items 15 to 17, wherein the filter is a linear filter or a Gaussian filter.

[Item 19]

The method of any one of Items 15 to 18, comprising rotating the vegetated area image by a plurality of rotation angles around an origin of a two-dimensional coordinate system that is defined by a first axis that is parallel to a direction in which the N summation lines extend and a second axis that is orthogonal to the first axis to generate a plurality of rotational vegetated area images, wherein:

deriving the N summation values comprises, for each of the plurality of rotational vegetated area images, taking a sum of pixel values of pixels composing the rotational vegetated area image along the N summation lines to derive the N summation values; and
deriving the N weighted summation values comprises, for each of the plurality of rotational vegetated area images, applying the filter to the linear array storing the N summation values and performing a convolution operation to derive the N weighted summation values,
the method further comprising detecting the plurality of crop rows based on sets of N weighted summation values derived from the plurality of rotational vegetated area images.

[Item 20]

The method of any one of Items 15 to 18, comprising rotating the vegetated area image by a plurality of rotation angles around an origin of a two-dimensional coordinate system that is defined by a first axis that is parallel to a direction in which the N summation lines extend and a second axis that is orthogonal to the first axis to generate a plurality of rotational vegetated area images, wherein:

deriving the N summation values comprises, for each of the plurality of rotational vegetated area images,

taking a sum of pixel values of pixels composing the rotational vegetated area image along each summation line to derive a first summation value, and taking a sum of a number of pixels in the rotational vegetated area image that are located on each summation line to derive a second summation value, to acquire N first summation values and N second summation values, respectively;

applying the filter to linear arrays storing the N first summation values and the N second summation values, respectively, and performing a convolution operation to derive N weighted first summation values and N weighted second summation values; and

determining a vegetation coverage rate of the weighted first summation value to the weighted second summation value associated with each of the N summation lines, and acquiring N vegetation coverage rates for the N summation lines,

the method further comprising detecting the plurality of crop rows based on sets of N vegetation coverage rates for the plurality of rotational vegetated area images.

[Item 21]

The method of Item 19 or 20, comprising applying a discrete Fourier transform to the vegetated area image to generate a frequency spectral image, and, from the spectral image, estimating an angle in the two-dimensional coordinate system between a direction in which the plurality of crop rows extend and the first axis.

[Item 22]

The method of Item 21, comprising determining the plurality of rotation angles by referring to the estimated angle, and rotating the vegetated area image by the plurality of rotation angles around the origin of the two-dimensional coordinate system to generate the plurality of rotational vegetated area images.

[Item 23]

The method of any one of Items 15 to 22, wherein generating the vegetated area image comprises generating the vegetated area image into which the vegetated area is extracted by applying an Lab conversion or deep learning to the image.

[Item 24]

The method of Item 15, further comprising identifying a region between adjacent crop rows based on a result of detecting the crop rows, and transmitting to an agricultural machine an instruction for pest control when weeds growing in the identified region are detected.

## INDUSTRIAL APPLICABILITY

Embodiments of the present disclosure may be utilized in an agricultural assistance system that manages the growth status of a crop on a cloud, for example.

## REFERENCE SIGNS LIST

**100** · · · server (server computer), **110** · · · communication I/F, **120** · · · processing unit, **121** · · · processor, **122** · · · ROM, **123** · · · RAM, **130** · · · storage device, **200** · · · terminal, **210** · · · input device, **220** · · · display device, **230** · · · processor, **240** · · · ROM, **250** · · · RAM, **260** · · · storage device, **270** · · · communication I/F, **300** · · · agricultural machine, **400** · · · drone, **410** · · · imager, **420** · · · RTK positioning unit, **420** · · · positioning unit, **440** · · · drive device, **450** · · · controller, **460** · · · data generating device, **470** · · · communication I/F, **1000** · · · agricultural assistance system

## Claims

1. An agricultural assistance system comprising a processing unit to process an image of a field including a plurality of crop rows as viewed from above, and to detect the plurality of crop rows, wherein
   the processing unit is configured to:

   from the image, generate a vegetated area image into which a vegetated area including the plurality of crop rows is extracted;
   along N summation lines, where N is an integer of 2 or greater, in the vegetated area image, take a sum of pixel values of pixels of the vegetated area image to derive N summation values associated with the N summation lines;
   apply a filter to a linear array storing the N summation values and perform a convolution operation to derive N weighted summation values; and
   detect the plurality of crop rows based on the N weighted summation values.

2. The agricultural assistance system of claim 1, wherein a weight of the filter differs depending on a kind of crop or a growth stage of the crop.

3. The agricultural assistance system of claim 1, wherein a size of the filter differs depending on a kind of crop or a growth stage of the crop.

4. The agricultural assistance system of any one of claims 1 to 3, wherein the filter is a linear filter or a Gaussian filter.

5. The agricultural assistance system of any one of claims 1 to 3, wherein:

the processing unit rotates the vegetated area image by a plurality of rotation angles around an origin of a two-dimensional coordinate system that is defined by a first axis that is parallel to a direction in which the N summation lines extend and a second axis that is orthogonal to the first axis to generate a plurality of rotational vegetated area images;

for each of the plurality of rotational vegetated area images,

the processing unit takes a sum of pixel values of pixels composing the rotational vegetated area image along the N summation lines to derive the N summation values; the processing unit applies the filter to the linear array storing the N summation values and performs a convolution operation to derive the N weighted summation values; and

the processing unit detects the plurality of crop rows based on sets of N weighted summation values derived from the plurality of rotational vegetated area images.

6. The agricultural assistance system of any one of claims 1 to 3, wherein:

the processing unit rotates the vegetated area image by a plurality of rotation angles around an origin of a two-dimensional coordinate system that is defined by a first axis that is parallel to a direction in which the N summation lines extend and a second axis that is orthogonal to the first axis to generate a plurality of rotational vegetated area images;

for each of the plurality of rotational vegetated area images,

the processing unit takes a sum of pixel values of pixels composing the rotational vegetated area image along each summation line to derive a first summation value, and takes a sum of a number of pixels in the rotational vegetated area image that are located on each summation line to derive a second summation value, to acquire N first summation values and N second summation values, respectively; the processing unit applies the filter to linear arrays storing the N first summation values and the N second summation values, respectively, and performs a convolution operation to derive N weighted first summation values and N weighted second summation values; and

the processing unit determines a vegetation coverage rate of the weighted first summation value to the weighted second summation value associated with each of the N summation lines, and acquires N vegetation coverage rates for the N summation lines; and

the processing unit detects the plurality of crop rows based on sets of N vegetation coverage rates derived from the plurality of rotational vegetated area images.

7. The agricultural assistance system of claim 5, wherein the processing unit applies a discrete Fourier transform to the vegetated area image to generate a frequency spectral image, and, from the spectral image, estimates an angle in the two-dimensional coordinate system between a direction in which the plurality of crop rows extend and the first axis.

8. The agricultural assistance system of claim 7, wherein the processing unit determines the plurality of rotation angles by referring to the estimated angle, and rotates the vegetated area image by the plurality of rotation angles around the origin of the two-dimensional coordinate system to generate the plurality of rotational vegetated area images.

9. The agricultural assistance system of any one of claims 1 to 3, wherein the processing unit generates the vegetated area image into which the vegetated area is extracted by applying an Lab conversion or deep learning to the image.

10. The agricultural assistance system of claim 1, wherein the processing unit is further configured to identify a region between adjacent crop rows based on a result of detecting the crop rows, and to transmit an instruction for pest control when weeds growing in the identified region are detected.

11. The agricultural assistance system of claim 10, wherein

the processing unit applies a labeling process to the vegetated area image to generate a labeling image; from the labeling image, the processing unit determines a pixel region composed of one or more connected components, the pixel region existing in the identified region; and

the processing unit detects the weeds growing in the identified region based on a shape characteristic parameter that characterizes a shape of the pixel region.

12. The agricultural assistance system of claim 10 or 11, comprising an agricultural machine to perform an operation for pest control in response to the instruction for pest control transmitted from the processing unit.

13. The agricultural assistance system of any one of claims 1 to 3, wherein crops in the crop row are lowland rice, and the weeds are barnyard grass.

14. The agricultural assistance system of any one of claims 1 to 3, comprising an unmanned aerial vehicle to image the field from above the field to acquire a multispectral image.

15. A computer-implemented method of detecting a plurality of crop rows in a field, the method causing a computer to execute:

acquiring an image of the field as viewed from above;

from the image, generating a vegetated area image into which a vegetated area including the plurality of crop rows is extracted;

along N summation lines, where N is an integer of 2 or greater, in the vegetated area image, taking a sum of pixel values of pixels of the vegetated area image to derive N summation values associated with the N summation lines;

applying a filter to a linear array storing the N summation values and performing a convolution operation to derive N weighted summation values; and

detecting the plurality of crop rows based on the N weighted summation values.

16. The method of claim 15, wherein a weight of the filter differs depending on a kind of crop or a growth stage of the crop.

17. The method of claim 15, wherein a size of the filter differs depending on a kind of crop or a growth stage of the crop.

18. The method of any one of claims 15 to 17, wherein the filter is a linear filter or a Gaussian filter.

19. The method of any one of claims 15 to 17, comprising rotating the vegetated area image by a plurality of rotation angles around an origin of a two-dimensional coordinate system that is defined by a first axis that is parallel to a direction in which the N summation lines extend and a second axis that is orthogonal to the first axis to generate a plurality of rotational vegetated area images, wherein:

deriving the N summation values comprises, for each of the plurality of rotational vegetated area images, taking a sum of pixel values of pixels composing the rotational vegetated area image along the N summation lines to derive the N summation values; and

deriving the N weighted summation values comprises, for each of the plurality of rotational vegetated area images, applying the filter to the linear array storing the N summation values and performing a convolution operation to derive the N weighted summation values,

the method further comprising detecting the plurality of crop rows based on sets of N weighted summation values derived from the plurality of rotational vegetated area images.

20. The method of any one of claims 15 to 17, comprising rotating the vegetated area image by a plurality of rotation angles around an origin of a two-dimensional coordinate system that is defined by a first axis that is parallel to a direction in which the N summation lines extend and a second axis that is orthogonal to the first axis to generate a plurality of rotational vegetated area images, wherein:

deriving the N summation values comprises, for each of the plurality of rotational vegetated area images,

taking a sum of pixel values of pixels composing the rotational vegetated area image along each summation line to derive a first summation value, and taking a sum of a number of pixels in the rotational vegetated area image that are located on each summation line to derive a second summation value, to acquire N first summation values and N second summation values, respectively;

applying the filter to linear arrays storing the N first summation values and the N second summation values, respectively, and performing a convolution operation to derive N weighted first summation values and N weighted second summation values; and

determining a vegetation coverage rate of the weighted first summation value to the weighted second summation value associated with each of the N summation lines, and acquiring N vegetation coverage rates for the N summation lines,

the method further comprising detecting the plurality of crop rows based on sets of N vegetation coverage rates for the plurality of rotational vegetated area images.

21. The method of claim 19, comprising applying a discrete Fourier transform to the vegetated area image to generate a frequency spectral image, and, from the spectral image, estimating an angle in the two-dimensional coordinate system between a direction in which the plurality of crop rows extend and the first axis.

22. The method of claim 21, comprising determining the plurality of rotation angles by referring to the estimated angle, and rotating the vegetated area image by the plurality of rotation angles around the origin of the two-dimensional coordinate system to generate the plurality of rotational vegetated area images.

23. The method of any one of claims 15 to 17, wherein generating the vegetated area image comprises generating the vegetated area image into which the vegetated area is extracted by applying an Lab conversion or deep learning to the image.

24. The method of claim 15, further comprising identifying a region between adjacent crop rows based on a result of detecting the crop rows, and transmitting to an agricultural machine an instruction for pest control when weeds growing in the identified region are detected.

FIG.1

*FIG.2*

**200**

TERMINAL

**210** — INPUT DEVICE

**220** — DISPLAY DEVICE

**240** — ROM

**250** — RAM

**230** — PROCESSOR

**260** — STORAGE DEVICE

**270** — COMMUNICATION I/F

**400**

DRONE

**410** — IMAGER

**420** — RTK POSITIONING UNIT

**430** — IMU

**470** — COMMUNICATION I/F

**440** — DRIVE DEVICE

**450** — CONTROLLER

**460** — DATA GENERATING DEVICE

**100**

SERVER

**110** — COMMUNICATION I/F

**120**

**121** — PROCESSOR

**122** — ROM

**123** — RAM

**130** — REMOTE SENSING IMAGE DATA

*FIG.3*

START

ACQUIRE IMAGE OF FIELD
AS VIEWED FROM ABOVE — S10

FROM THE IMAGE, GENERATE A VEGETATED AREA
IMAGE INTO WHICH A VEGETATED AREA BEING
THE PLURALITY OF CROP ROWS IS EXTRACTED — S20

ALONG THE N SUMMATION LINES
IN THE VEGETATED AREA IMAGE,
TAKE A SUM OF PIXEL VALUES OF PIXELS
COMPOSING THE VEGETATED AREA IMAGE
TO CALCULATE N SUMMATION VALUES
ASSOCIATED WITH THE N SUMMATION LINES — S30

CALCULATE N WEIGHTED SUMMATION VALUES
BY APPLYING FILTER TO A LINEAR ARRAY STORING
THE N SUMMATION VALUES AND PERFORMING
CONVOLUTION OPERATION — S40

DETECT PLURALITY OF CROP ROWS
BASED ON THE N WEIGHTED SUMMATION VALUES — S50

END

FIG.4A

FIG.4B

*FIG.5A*

*FIG.5B*

FIG.6A

FIG.6B

## FIG.7

START

↓

ROTATE VEGETATED AREA IMAGE
BY M ROTATION ANGLES AROUND THE ORIGIN
OF TWO-DIMENSIONAL COORDINATE SYSTEM
TO GENERATE M ROTATIONAL
VEGETATED AREA IMAGES — S31

↓

FOR EACH ROTATIONAL VEGETATED AREA IMAGE,
TAKE A SUM OF PIXEL VALUES OF PIXELS
COMPOSING THE ROTATIONAL VEGETATED AREA
IMAGE ALONG THE N SUMMATION LINES TO
CALCULATE THE N SUMMATION VALUES — S32

↓

NO ⟵ SETS OF N SUMMATION VALUES
HAVE BEEN ACQUIRED FOR
M ROTATIONAL VEGETATED AREA IMAGES? — S33

↓ YES

END

*FIG.8A*

SUMMATION VALUE

Y

ρ

70, 71A

0°

O · X

*FIG.8B*

Y

SUMMATION VALUE

ρ

71B

75°

O X

# FIG.8C

# FIG.8D

FIG.9

FIG.10A

FIG.10B

*FIG.11*

START

FOR EACH ROTATIONAL VEGETATED AREA IMAGE, CALCULATE N WEIGHTED SUMMATION VALUES BY APPLYING FILTER TO A LINEAR ARRAY STORING THE N SUMMATION VALUES AND PERFORMING CONVOLUTION OPERATION — S41

NO

SETS OF N WEIGHTED SUMMATION VALUES FOR M ROTATIONAL VEGETATED AREA IMAGES HAVE BEEN ACQUIRED? — S42

YES

END

## FIG.12

CROP ROW

SUMMATION VALUE

$\rho$

×

WEIGHT

$\rho_{width}$

$\rho$

=

WEIGHT
SUMMATION
VALUE

$\rho$

## FIG.13

<u>θ=75</u>

f (75、-800) = 0.5
f (75 、-799 ) = 1.5
f (75 、-798) = 1.1
⋮

f (75、-50) = 8.0
⋮

<u>θ=75.5</u>

f (75.5、-801) = 0.4
f (75.5、-800) = 1.3
f (75.5、-799) = 0.9
⋮

f (75.5、-60) = 6.5
⋮

⋮

<u>θ=85</u>

f (85、-850) = 0.2
f (85 、-849) = 0.3
f (85 、-848) = 0.5
⋮

f (85 、-40) = 7.2
⋮

SORT IN DESCENDING ORDER

f (75、-50) = 8.0
f (85 、-40) = 7.2
f (75.5、-60) = 6.5
f (75.2、320) = 6.2
⋮

f (79、1) = 0.1
f (81 、1) = 0.0
f (78、1) = 0.0

*FIG.14*

```
                    ┌─────────────┐
                    │    START    │
                    └──────┬──────┘
                           │
                           ▼
    ┌──────────────────────────────────────────┐
    │         ROTATE VEGETATED AREA IMAGE BY    │
    │  M ROTATION ANGLES AROUND THE ORIGIN OF   │        S31
    │    TWO-DIMENSIONAL COORDINATE SYSTEM      │
    │    TO GENERATE M ROTATIONAL VEGETATED     │
    │              AREA IMAGES                  │
    └──────────────────────┬───────────────────┘
                           │
                           ▼
    ┌──────────────────────────────────────────┐
    │ FOR EACH ROTATIONAL VEGETATED AREA IMAGE, │
    │        CALCULATE N FIRST AND              │        S34
    │        SECOND SUMMATION VALUES            │
    └──────────────────────┬───────────────────┘
                           │
                           ▼
              SETS OF N FIRST AND
     NO     SECOND SUMMATION VALUES
    ◄────── HAVE BEEN ACQUIRED FOR                       S35
             M ROTATIONAL VEGETATED
                AREA IMAGES?
                           │
                          YES
                           ▼
                    ┌─────────────┐
                    │     END     │
                    └─────────────┘
```

# FIG.15

**START**

APPLY FILTER TOLINEAR ARRAYS CONTAINING N FIRST AND SECOND SUMMATION VALUES, RESPECTIVELY, TO CALCULATE N WEIGHTED FIRST AND SECOND SUMMATION VALUES — S43

DETERMINE A VEGETATION COVERAGE RATE OF WEIGHTED FIRST SUMMATION VALUE TO WEIGHTED SECOND SUMMATION VALUE ASSOCIATED WITH EACH OF THE N SUMMATION LINES, AND ACQUIRE N VEGETATION COVERAGE RATES FOR N SUMMATION LINES — S44

SETS OF N VEGETATION COVERAGE RATES HAVE BEEN ACQUIRED FOR M ROTATIONAL VEGETATED AREA IMAGES? — S45

NO

YES

**END**

*FIG.16*

```
                    ┌─────────────┐
                    │    START    │
                    └─────────────┘
                           │
                           ▼
┌──────────────────────────────────────────┐
│ ACQUIRE IMAGE OF FIELD AS VIEWED FROM ABOVE│ ─── S10
└──────────────────────────────────────────┘
                           │
                           ▼
┌──────────────────────────────────────────┐
│ FROM THE IMAGE, GENERATE A VEGETATED AREA  │
│ IMAGE INTO WHICH A VEGETATED AREA BEING    │ ─── S20
│ THE PLURALITY OF CROP ROWS IS EXTRACTED    │
└──────────────────────────────────────────┘
                           │
                           ▼
┌──────────────────────────────────────────┐
│ ALONG THE N SUMMATION LINES IN THE         │
│ VEGETATED AREA IMAGE, TAKE A SUM OF PIXEL   │
│ VALUES OF PIXELS COMPOSING THE VEGETATED   │ ─── S30
│ AREA IMAGE TO CALCULATE N SUMMATION VALUES │
│ ASSOCIATED WITH THE N SUMMATION LINES      │
└──────────────────────────────────────────┘
                           │
                           ▼
┌──────────────────────────────────────────┐
│ CALCULATE N WEIGHTED SUMMATION VALUES      │
│ BY APPLYING FILTER TO A LINEAR ARRAY       │ ─── S40
│ STORING THE N SUMMATION VALUES AND         │
│ PERFORMING CONVOLUTION OPERATION           │
└──────────────────────────────────────────┘
                           │
                           ▼
┌──────────────────────────────────────────┐
│ DETECT PLURALITY OF CROP ROWS BASED ON     │ ─── S50
│ THE N WEIGHTED SUMMATION VALUES            │
└──────────────────────────────────────────┘
                           │
                           ▼
┌──────────────────────────────────────────┐
│ IDENTIFY A REGION BETWEEN ADJACENT         │
│ CROP ROWS BASED ON A RESULT OF             │ ─── S60
│ DETECTING THE CROP ROWS                    │
└──────────────────────────────────────────┘
                           │
                           ▼
              ◇ WEEDS HAVE BEEN DETECT IN THE IDENTIFIED REGION? ◇ ─── S70
  NO ◄───────┘                         │ YES
   │                                   ▼
   │               ┌──────────────────────────────────────┐
   │               │ TRANSMIT INSTRUCTION FOR PEST         │ ─── S80
   │               │ CONTROL TO AGRICULTURAL MACHINE       │
   │               └──────────────────────────────────────┘
   │                                   │
   │                                   ▼
   │                            ┌─────────────┐
   └───────────────────────────►│     END     │
                                └─────────────┘
```

FIG.17

FIG.18

## INTERNATIONAL SEARCH REPORT

| International application No. |
| --- |
| **PCT/JP2024/031731** |

| A. | CLASSIFICATION OF SUBJECT MATTER |
| --- | --- |

*A01G 7/00*(2006.01)i; *A01M 21/04*(2006.01)i
FI:    A01G7/00 603; A01M21/04 C

According to International Patent Classification (IPC) or to both national classification and IPC

| B. | FIELDS SEARCHED |
| --- | --- |

Minimum documentation searched (classification system followed by classification symbols)

A01G7/00; A01M21/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580 (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2023/276226 A1 (KUBOTA CORPORATION) 05 January 2023 (2023-01-05) entire text, all drawings | 1-24 |
| A | US 2023/0005260 A1 (ZHEJIANG UNIVERSITY) 05 January 2023 (2023-01-05) entire text, all drawings | 1-24 |
| A | US 2007/0001096 A1 (WEI, Jiantao) 04 January 2007 (2007-01-04) entire text, all drawings | 1-24 |

☐ Further documents are listed in the continuation of Box C.    ☑ See patent family annex.

| | |
| --- | --- |
| * Special categories of cited documents: | |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 November 2024** | **19 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

| International application No. |
| --- |
| **PCT/JP2024/031731** |

| Patent document cited in search report | | | Publication date (day/month/year) | Patent family member(s) | | | Publication date (day/month/year) |
| --- | --- | --- | --- | --- | --- | --- | --- |
| WO | 2023/276226 | A1 | 05 January 2023 | EP | 4335265 | A1 | |
| | | | | entire text, all drawings | | | |
| | | | | US | 2024/0202966 | A1 | |
| | | | | KR | 10-2024-0007667 | A | |
| US | 2023/0005260 | A1 | 05 January 2023 | WO | 2022/047830 | A1 | |
| | | | | CN | 112146646 | A | |
| US | 2007/0001096 | A1 | 04 January 2007 | AU | 2006202804 | A1 | |

**EP 4 785 777 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6418604 B